# EUROPÄISCHE PATENTSCHRIFT

(11) **EP 3 099 521 B1**
(45) Veröffentlichungstag und Bekanntmachung des Hinweises auf die Patenterteilung: **03.01.2018**
(21) Anmeldenummer: 15701294.9
(22) Anmeldetag: 24.01.2015
(51) Int. Cl.: B60K 35/00, B60K 37/02, B60K 37/04, B60K 37/06, B60R 11/00, B60R 11/02, B60R 16/02

(54) **SYSTEM ZUR BEDIENUNG EINES KOMBIINSTRUMENTS EINES FAHRZEUGS UND EINER MOBILEN ELEKTRONISCHEN VORRICHTUNG, DIE LÖSBAR VON EINER FAHRZEUGSEITIGEN HALTERUNG GEHALTERT WERDEN KANN**
SYSTEM FOR OPERATING AN INSTRUMENT CLUSTER OF A VEHICLE AND A MOBILE ELECTRONIC DEVICE WHICH CAN BE DETACHABLY HELD BY A HOLDER ON THE VEHICLE
SYSTÈME DE COMMANDE D'UN TABLEAU DE BORD D'UN VÉHICULE ET D'UN DISPOSITIF ÉLECTRONIQUE MOBILE, LEQUEL DISPOSITIF PEUT ÊTRE MAINTENU DE MANIÈRE AMOVIBLE PAR UN ÉLÉMENT DE RETENUE CÔTÉ VÉHICULE

(30) Priorität: 30.01.2014 DE 102014001182
(43) Veröffentlichungstag der Anmeldung: 07.12.2016
(73) Patentinhaber: Audi AG, 85049 Ingolstadt (DE)
(72) Erfinder: BOUAZIZ, Tahar, 85055 Ingolstadt (DE)
(86) Internationale Anmeldenummer: PCT/EP2015/000133
(87) Internationale Veröffentlichungsnummer: WO 2015/113749

(56) Entgegenhaltungen:
- WO-A1-2012/110020
- DE-A1-102011 121 108
- JP-A- 2002 293 165
- US-A1- 2006 155 431

## Beschreibung

Die vorliegende Erfindung betrifft ein System zur Bedienung eines Kombiinstruments eines Fahrzeugs und einer mobilen elektronischen Vorrichtung, die lösbar von einer fahrzeugseitigen Halterung gehaltert werden kann.

Mit der zunehmenden Anzahl an Fahrzeugfunktionen, die von modernen Fahrzeugen, insbesondere Kraftfahrzeugen, zur Verfügung gestellt werden, steigen auch die Anforderungen an die Anzeigeeinrichtungen im Fahrzeug, mit denen Informationen über die verschiedenen Fahrzeugfunktionen angezeigt werden können und unter deren Zuhilfenahme Einstellungen bei den verschiedenen Fahrzeugfunktionen und Fahrerassistenzsystemen vorgenommen werden können.

Aus diesem Grund verfügen viele moderne Kraftfahrzeuge neben dem sogenannten Kombiinstrument, das in der Regel vom Fahrer aus gesehen hinter der Lenkhandhabe (dem Lenkrad) angeordnet ist, auch über wenigstens eine weitere Anzeigeeinrichtung, beispielsweise in Form eines Displays mit einer hoch auflösenden Matrixanzeige, die oftmals neben der Lenkhandhabe im Bereich der Mittelkonsole angeordnet ist.

Da Benutzer von Fahrzeugen sehr häufig auch über mobile elektronische Vorrichtungen, wie beispielsweise Mobiltelefone (Smartphones), Tablet-PCs, mobile Navigationsgeräte, etc. verfügen, sind Lösungen entwickelt worden, derartige mobile elektronische Vorrichtungen lösbar in einem Fahrzeug zu befestigen und mit fahrzeugseitigen Einrichtungen zu koppeln. Ebenfalls bekannt ist, derartige mobile elektronische Vorrichtungen dabei zur Anzeige von Fahrzeugfunktionen zu verwenden, wodurch die mobilen elektronischen Vorrichtungen auch dazu geeignet sein können, die oben erwähnte weitere Anzeigeeinrichtung zu substituieren.

So hat die DE 101 20 465 A1 eine Vorrichtung für die Anzeige und/oder Bedienung von Fahrzeugfunktionen in einem Fahrzeug zum Gegenstand, die ein Modul mit einer Anzeige- und/ oder Bedieneinheit und einem Rechner umfasst, wobei der Rechner für die Kommunikation mit anderen Fahrzeugeinheiten ausgelegt ist, wobei das Modul eine eigenständige Einheit mit Energiequelle bildet, die sich in einer im Fahrzeug vorgesehenen adapterartigen Halterung betreiben lässt, und wobei das Modul aus der Halterung leicht herausnehmbar und im herausgenommenen Zustand wenigstens mit einer vorgegebenen Funktionalität betreibbar ist. Durch das Modul können Anzeige- und/oder Bedienfunktionen in einem Fahrzeug substituiert werden. Des Weiteren ist das Modul dazu ausgelegt, parallel neben weiteren in einem Fahrzeug angeschlossenen Modulen betreibbar zu sein, die miteinander kommunizieren. Das Modul kann auch multimediafähig sein. Auch werden eine Halterung und ein Bussystem beschrieben.

Aus der DE 103 08 897 A1 ist ein Kraftfahrzeug mit einer Bordelektronik bekannt, die eine Schnittstelle zum Datenaustausch sowie zur Darstellung von Informationen und zur Steuerung von Kraftfahrzeugfunktionen mit einem PDA (Personal Digital Assistant) oder einem Smartphone aufweist, wobei zwischen der Schnittstelle und dem PDA oder dem Smartphone im Innenraum des Kraftfahrzeuges eine Dockingstation angeordnet ist, wobei die Dockingstation eine mit der Bordelektronik gekoppelte Eingabe und/oder Ausgabeeinheit umfasst.

Die EP 2 103 476 A2 beschreibt eine Head-Unit für ein Kraftfahrzeug, mit einem Bedienelement, wie zum Beispiel Taster, Schalter, Schaltwippen, Drehsteller etc.; erste Funktionsbauteile, wie zum Beispiel Radio, Bordcomputer, Klimaanlage, Soundsystem, etc.; insbesondere eine Anzeigeeinrichtung, wie zum Beispiel ein Display; einen Daten- und/oder Energiebus mit Dockingstation zur Befestigung und/oder Kommunikation und/oder Energieversorgung von in die Head-Unit integrierbaren mobilen elektronischen Geräten, insbesondere der Konsumelektronik wie zum Beispiel PDAs, Smartphones oder MP3-PLayer, wobei die ersten Funktionsbauteile mittels der Bedienelemente bedienbar sind und wobei insbesondere in der Anzeigeeinrichtung Informationen anzeigbar sind, welche in Verbindung mit den ersten Funktionsbauteilen stehen. Das mobile elektronische Gerät ist mittels wenigstens einem Teil der im Kraftfahrzeug angeordneten Bedienelemente bedienbar, wenn das mobile elektronische Gerät drahtlos oder drahtgebunden in Kommunikationsverbindung mit der Dockingstation steht, wobei die ersten Funktionsbauteile in ihren Grundfunktionen wahlweise über die im Kraftfahrzeug vorhandenen Bedienelemente und über das mobile elektronische Gerät bedienbar sind, wenn das mobile elektronische Gerät drahtlos oder drahtgebunden in Kommunikationsverbindung mit der Dockingstation steht und wobei durch das mobile elektronische Gerät zweite Funktionsbauteile mit Sonderfunktionen wie zum Beispiel Navigation, Telefon, MP3-Player, etc. im Kraftfahrzeug verfügbar sind, wenn das mobile elektronische Gerät drahtlos oder drahtgebunden in Kommunikationsverbindung mit der Dockingstation steht.

Die DE 10 2011 101 808 A1 beschreibt ein Verfahren und ein System zum Bereitstellen einer Nutzerschnittstelle in einem Fahrzeug, bei dem eine drahtlose Datenverbindung zwischen dem Fahrzeug und einem mobilen Wiedergabegerät, das in dem Fahrzeug lösbar verbunden ist oder das von einem Nutzer in dem Fahrzeug frei gehalten wird, aufgebaut wird. Bei dem Verfahren werden für den Betrieb des Fahrzeugs relevante Betriebsparameter fahrzeugseitig erfasst und es werden über eine von der Sitzposition des Fahrers ablesbare, fest im Fahrzeug angeordnete Anzeige- und Bedieneinrichtung Informationen über erfasste Betriebsparameter angezeigt. Es wird eine drahtlose Datenverbindung zwischen dem Fahrzeug und einem mobilen Wiedergabegerät, das in dem Fahrzeug lösbar verbunden ist oder das von einem Nutzer in dem Fahrzeug frei gehalten wird, aufgebaut, es werden Daten zur Erzeugung eines Anzeigeinhalts über die drahtlose Datenverbindung vom Fahrzeug an das Wiedergabegerät übertragen und basierend auf den übertragenen Daten wird ein Anzeigeinhalt auf dem Wiedergabegerät erzeugt, welcher auf der Anzeige- und Bedieneinrichtung angezeigte Informationen über erfasste Betriebsparameter umfasst.

Und aus der DE 10 2011 112 383 A1 ist ein Kombiinstrument für ein Fahrzeug bekannt, wobei das Kombiinstrument eine Anzeigevorrichtung zum Darstellen einer ersten Information des Fahrzeugs für einen Benutzer des Fahrzeugs umfasst. Das Kombiinstrument umfasst weiterhin eine Halterung zur Aufnahme einer mobilen Vorrichtung mit einer Anzeigeeinheit, eine Schnittstelle zum Übertragen einer zweiten darzustellenden Information des Fahrzeugs an die mobile Vorrichtung und eine Verarbeitungseinheit. Die Verarbeitungseinheit ist mit der Schnittstelle gekoppelt und ausgestaltet, die zweite Information zu erfassen und über die Schnittstelle an die mobile Vorrichtung zu

Die DE 10 2011 121 108 1 zeigt ein System zur Bedienung eines Kombiinstruments mit den Merkmalen des Oberbegriffs des Anspruchs 1.

Es ist Aufgabe der vorliegenden Erfindung, die aus dem Stand der Technik bekannten Lösungen in neuartiger und vorteilhafter Weise weiterzubilden und hierdurch Vorteile zu erreichen, die mit dem vorbekannten Lösungen nicht realisierbar sind.

Diese Aufgabe wird gelöst durch das System gemäß Anspruch 1 sowie das Fahrzeug gemäß Anspruch 8. Vorteilhafte Weiterbildungen des Systems sowie des Fahrzeugs sind Gegenstand der Unteransprüche.

Erfindungsgemäß wird ein System zur Bedienung eines Kombiinstruments eines Fahrzeugs und einer mobilen elektronischen Vorrichtung vorgeschlagen, wobei die mobile elektronische Vorrichtung lösbar von einer fahrzeugseitigen Halterung gehaltert werden kann und eine Anzeigeeinrichtung zum Anzeigen einer ersten Information aufweist. Das System weist ein Kombiinstrument mit einer Anzeigeeinrichtung zum Anzeigen einer zweiten Information, eine Halterung zur lösbaren Aufnahme der mobilen elektronischen Vorrichtung, eine Schnittstelle zum Übertragen von Signalen zu der mobilen elektronischen Vorrichtung und zum Erkennen, ob sich eine mobile elektronische Vorrichtung in der Halterung befindet, sowie eine Bedieneinrichtung zur Bedienung der mobilen elektronischen Vorrichtung auf.

Das erfindungsgemäße System ist dadurch gekennzeichnet, dass es weiter eine Verarbeitungseinrichtung aufweist, die dazu eingerichtet ist, Bedieneingaben an der Bedieneinrichtung automatisch als solche zur Bedienung des Kombiinstruments zu verarbeiten, wenn sich keine mobile elektronische Vorrichtung in der Halterung befindet und als solche zur Bedienung der mobilen elektronischen Vorrichtung, wenn sich die mobile elektronische Vorrichtung in der Halterung befindet.

Durch das erfindungsgemäße System wird eine intelligente Umschaltung der Bedieneinrichtung zur Bedienung der mobilen elektronischen Vorrichtung oder des Kombiinstruments zur Verfügung gestellt. Befindet sich die mobile elektronische Vorrichtung in der Halterung, dient die Bedieneinrichtung zur Bedienung der mobilen elektronischen Vorrichtung. Befindet sich die mobile elektronische Vorrichtung nicht (mehr) in der Halterung, wird dies von der Verarbeitungseinrichtung erkannt und Bedieneingaben bei der Bedieneinrichtung werden automatisch als solche zur Bedienung des Kombiinstruments verarbeitet, d.h. die Bedieneinrichtung fungiert in diesem Fall als Bedieneinrichtung für das Kombiinstrument. Befindet sich die mobile elektronische Vorrichtung wieder in der Halterung, wird dies von der Verarbeitungseinrichtung ebenfalls erkannt und werden Bedieneingaben bei der Bedieneinrichtung automatisch zur solche zur Bedienung der mobilen elektronischen Vorrichtung verarbeitet, d.h. die Bedieneinrichtung fungiert in diesem Fall wieder als Bedieneinrichtung für die mobile elektronische Vorrichtung.

Gemäß einer ersten vorteilhaften Weiterbildung des Systems ist die Anzeigeeinrichtung des Kombiinstruments dazu eingerichtet, aufgrund einer Bedieneingabe an der Bedieneinrichtung, die eingegeben wird, wenn sich keine mobile elektronische Vorrichtung in der Halterung befindet, eine erste Information anzeigen zu können.

Gemäß einer zweiten vorteilhaften Weiterbildung des Systems umfasst die die erste Information eine Motordrehzahlinformation, eine Kraftstoffverbrauchsinformation, eine Fahrzeugdiagnoseinformation, eine Navigationsinformation, eine Telefoninformation, eine Bedieninformation eines Unterhaltungssystems des Fahrzeugs, eine Notrufinformation, eine Zeitinformation, eine Bedieninformation eines Klimatisierungssystems des Fahrzeugs, eine Wegstreckeninformation, eine Warninformation, eine Statusinformation und/oder eine Füllstandsinformation.

Gemäß einer dritten vorteilhaften Weiterbildung des Systems umfasst das Kombiinstrument eine segmentierte Anzeigeeinrichtung und/oder eine Matrixanzeigeeinrichtung.

Gemäß einer weiteren vorteilhaften Weiterbildung des Systems ist die Schnittstelle auch zum Übertragen von Signalen von der mobilen elektronischen Vorrichtung zu einer fahrzeugseitigen Einrichtung, zum Übertragen von Signalen von einer fahrzeugseitigen Einrichtung zu der mobilen elektronischen Vorrichtung und/oder zum Übertragen von elektrischer Energie zu der mobilen elektronischen Vorrichtung eingerichtet.

Gemäß noch einer weiteren vorteilhaften Weiterbildung des Systems umfasst dieses weiter die mobile elektronische Vorrichtung, welche von einem Nutzer als ein Mobiltelefon, eine mobile Navigationseinrichtung, ein mobiler elektronischen persönlichen Assistent, eine mobile Medienwiedergabeeinrichtung und/oder ein mobiler Tablet-Computer verwendbar ist, wenn sie sich nicht in der Halterung befindet.

Weitere Vorteile ergeben sich, wenn bei dem System die Bedieneinrichtung wenigstens einen Dreh-/Drückschalter, einen Joystick, eine Taste, eine Tastatur, einen Schalter, eine Schaltwippe und/oder ein berührungs- und/oder näherungsempfindliches Pad aufweist.

Die vorliegende Erfindung betrifft auch ein Fahrzeug umfassend ein erfindungsgemäßes System oder eines seiner vorteilhaften Weiterbildungen.

Gemäß einer ersten vorteilhaften Weiterbildung des Fahrzeugs ist die Halterung zur lösbaren Aufnahme der mobilen elektronischen Vorrichtung in einem Bereich neben der Lenkhandhabe am Armaturenbrett angeordnet.

Gemäß einer zweiten vorteilhaften Weiterbildung des Fahrzeugs ist die Bedieneinrichtung in einem Bereich zwischen dem Fahrersitz und dem Beifahrersitz, an der Lenkhandhabe und/oder am Armaturenbrett angeordnet.

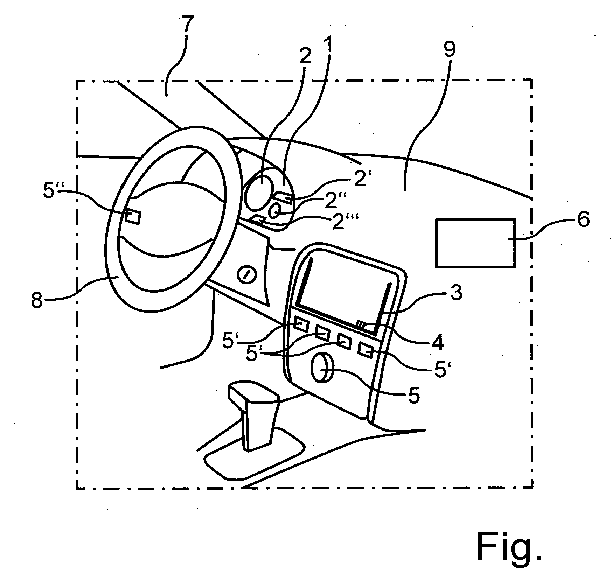

Die vorliegende Erfindung wird anhand der beigefügten Zeichnung näher erläutert.

Die Figur zeigt in schematischer Ansicht eine Teilansicht des Innenraums eines Fahrzeugs mit dem erfindungsgemäßen System.

Die Darstellungen in der Figur sind rein schematisch und nicht maßstabsgerecht. Innerhalb der Figur sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie oben bereits ausgeführt, dient das erfindungsgemäße System zur alternativen Bedienung eines Kombiinstruments eines Fahrzeugs oder einer mobilen elektronischen Vorrichtung, die lösbar von einer fahrzeugseitigen Halterung gehaltert werden kann und eine Anzeigeeinrichtung zum Anzeigen einer ersten Information aufweist.

Das System umfasst ein Kombiinstrument 1 mit einer Anzeigeeinrichtung 2, 2', 2", 2'" zum Anzeigen einer zweiten Information, eine Halterung 3 zur lösbaren Aufnahme der mobilen elektronischen Vorrichtung, eine Schnittstelle 4 zum Übertragen von Signalen zu der mobilen elektronischen Vorrichtung und zum Erkennen, ob sich eine mobile elektronische Vorrichtung in der Halterung 3 befindet, sowie eine Bedieneinrichtung 5, 5', 5" zur Bedienung der mobilen elektronischen Vorrichtung.

Das System ist dadurch gekennzeichnet, dass es weiter eine Verarbeitungseinrichtung 6 aufweist, die dazu eingerichtet ist, Bedieneingaben an der Bedieneinrichtung 5, 5', 5" automatisch als solche zur Bedienung des Kombiinstruments zu verarbeiten, wenn sich keine mobile elektronische Vorrichtung in der Halterung 3 befindet und als solche zur Bedienung der mobilen elektronischen Vorrichtung, wenn sich die mobile elektronische Vorrichtung in der Halterung 3 befindet.

Ein Kombiinstrument 1 eines Fahrzeugs ist üblicherweise in einem Bereich vor dem Fahrer angeordnet, welcher von dem Fahrer leicht einsehbar ist und auch unter schwierigen Beleuchtungsbedingungen, beispielsweise nachts oder bei starker Sonneneinstrahlung, gut ablesbar ist. Das Kombiinstrument kann beispielsweise aus Sicht des Fahrers hinter einem Lenkrad des Fahrzeugs angeordnet sein.

Das Kombiinstrument 1 umfasst wenigstens eine Anzeigeeinrichtung 2, 2', 2", 2'" zum Darstellen einer zweiten Information. Diese zweite Information umfasst, sofern dies durch die jeweilige nationale Gesetzgebung vorgesehen ist, wenigstens die jeweils gesetzlich vorgeschriebenen Anzeigen bzw. Darstellungen. Bspw. umfasst gemäß der deutschen Straßenverkehrs-Zulassung-Ordnung (§57 StVZO) die zweite Information wenigstens eine Geschwindigkeitsinformation.

Alle weiteren Informationen, die gemäß der vorliegenden Anmeldung als "erste Information" bzw. "erste Informationen" bezeichnet werden, sind solche, die gesetzlich nicht zwingend vorgeschrieben sind, die für einen Nutzer eines Fahrzeugs jedoch sinnvoll und hilfreich sind. Soweit dies nicht durch Gesetze oder andere Vorschriften untersagt ist, können erste Informationen auch mittels der Anzeigeeinrichtung(en) 2,2',2",2'" des Kombiinstruments 1 dargestellt werden.

Daher ist bekannt, dass durch das Kombiinstrument 1 bzw. die Anzeigeeinrichtung(en) 2, 2', 2", 2'" des Kombiinstruments 1 oftmals ein oder mehrere erste Informationen dargestellt werden können, wie bspw. eine Wegstreckeninformation ("Kilometerzähler", "Tageskilometerzähler"), eine Motordrehzahlinformation, eine Kraftstoffverbrauchsinformation, eine Fahrzeugdiagnoseinformation (Bordcomputer), eine Navigationsinformation, eine Telefoninformation, eine Bedieninformation eines Unterhaltungssystems des Fahrzeugs (Multimedia-Anwendung), eine Notrufinformation, eine Zeitinformation (bspw. Uhrzeit, Fahrtdauer, voraussichtliche Dauer bis zum Ende der Fahrt), eine Bedieninformation eines Klimatisierungssystems des Fahrzeugs, eine Warninformation (bspw. wegen einem Fehler in der Bordelektronik oder Motorsteuerung, mangelndem Öldruck, Aktivität von ABS oder ESP, Abstandswarnung), eine Statusinformation (bspw. welche Scheinwerfer sind eingeschaltet, Status des Fahrtrichtungsanzeigers, Kühlmitteltemperatur, Information über eine durchzuführende Wartung, Ausfall von Leuchtmitteln) und/oder eine Füllstandsinformation (bspw. von Treibstoff, Motoröl).

Das Kombiinstrument 1 kann als Anzeigeeinrichtung(en) 2, 2', 2", 2'" jede geeignete Einrichtung(en) aufweisen, wie mechanische Anzeigeeinrichtung(en), segmentierte Anzeigeeinrichtung(en), Matrixanzeigeeinrichtung(en) (wie etwa Flüssigkristallanzeige(n)), Leuchten, Piktogramme, etc..

Neben (einer) Anzeigeeinrichtung(en) 2, 2', 2", 2'" kann das Kombiinstrument 1 auch über akustische Ausgabemöglichkeiten verfügen, beispielsweise für Warntöne oder als hörbare Rückmeldung der Blinkerfunktion.

Da die Platzverhältnisse und damit die Anzeigemöglichkeiten durch die Anzeigeeinrichtungen 2, 2', 2", 2'" des Kombiinstruments 1 naturgemäß beschränkt sind, werden erste Informationen oftmals durch eine oder mehrere weitere Anzeigeeinrichtungen außerhalb des Kombiinstruments 1, bspw. im Bereich der Mittelkonsole dargestellt. Hierbei handelt es sich oftmals um eine Anzeigeeinrichtung mit einem Display. Dieses Display kann bspw. als eines mit einer Matrixanzeigeeinrichtung, wie etwa eine Flüssigkristall-Anzeigeeinrichtung in Form einer TFT-Anzeigeeinrichtung zur Darstellung beliebiger graphischer, textueller und farbiger Informationen und gegebenenfalls berührungs- oder näherungsempfindlich ausgestaltet sein. In einfacher ausgestatteten Fällen kann/können diese Anzeigeeinrichtung(en) auch in Form von einer oder mehreren segmentierte(n) Anzeigeeinrichtung(en) vorgesehen sein. Eine segmentierte Anzeigeeinrichtung kann bspw. eine Flüssigkristall-Anzeigeeinrichtung umfassen, welche vorbestimmte ansteuerbare Segmente umfasst, um vorbestimmte Funktionen, wie zum Beispiel eine Statusinformation und/oder eine Füllstandsinformation darzustellen.

Die mobile elektronische Vorrichtung, die gemäß der vorliegenden Erfindung in die Halterung 3 lösbar eingesetzt werden kann, weist eine Anzeigeeinrichtung zum Anzeigen einer ersten Information auf. Bei dieser Anzeigeeinrichtung kann es sich um eine solche handeln, wie sie üblicherweise auch für die oben beschriebene(n) weitere(n) Anzeigeeinrichtungen außerhalb des Kombiinstruments 1 Verwendung finden.

Gemäß einer bevorzugten Ausführungsform ist/sind die Anzeigeeinrichtung(en) 2, 2', 2", 2'" des Kombiinstruments 1 dazu eingerichtet, aufgrund einer Bedieneingabe an der Bedieneinrichtung 5, 5', 5", die eingegeben wird, wenn sich keine mobile elektronische Vorrichtung in der Halterung 3 befindet, eine erste Information anzeigen zu können. In einem solchen Fall aber auch ganz allgemein ist es von Vorteil, wenn das Kombiinstrument 1 über wenigstens eine Anzeigeeinrichtung 2, 2', 2", 2'" verfügt, mit dem zumindest inhaltlich die gleichen Informationen (etwa Kartendarstellung eines Navigationssystems) dargestellt werden können, wie mit der Anzeigeeinrichtung der mobilen elektronischen Vorrichtung. Um für einen Fahrer den Unterschied zwischen der ihm durch die Anzeigeeinrichtung 2, 2', 2", 2'" des Kombiinstruments 1 und durch die Anzeigeeinrichtung der mobilen elektronischen Vorrichtung dargestellten Information so gering wie möglich zu gestalten, ist es weiter von Vorteil, wenn wenigstens eine Anzeigeeinrichtung 2, 2', 2", 2'" des Kombiinstruments 1 und die Anzeigeeinrichtung der mobilen elektronischen Vorrichtung im Hinblick auf Größe, Auflösung, Darstellungsmöglichkeit (farbig, Graustufen, schwarz-weiß) einander möglichst ähnlich sind, bevorzugt sogar identisch.

Bezüglich der ersten Information(en), die durch das Kombiinstrument 1 und die Anzeigeinrichtung der mobilen elektronischen Vorrichtung, wenn sich diese in der Halterung 3 befindet, angezeigt werden können, bestehen keine besonderen Beschränkungen. So kann sich in einem einfachsten Fall die Anzeige bei dem Kombiinstrument 1 auf die gesetzlich vorgeschriebene zweite Information beschränken und alle ersten Informationen ausschließlich auf der Anzeigeeinrichtung der mobilen elektronischen Vorrichtung angezeigt werden. Es können aber auch ein oder mehrere erste Informationen durch das Kombiinstrument 1 angezeigt werden, insbesondere wenn es sich um solche handelt, die herkömmlicher Weise durch das Kombiinstrument 1 angezeigt werden (bspw. eine Drehzahlinformation, eine Wegstreckeninformation, eine Füllstandsanzeige für Kraftstoff, Zustandsinformationen bezüglich Scheinwerfer und Leuchten, Warninformationen bezüglich Öldruck, Öltemperatur, Kühlmitteltemperatur, Motorsteuerung, etc.). Dieses eine oder mehreren ersten Informationen können dann entweder durch die Anzeigeeinrichtung der mobilen elektronischen Vorrichtung nicht anzeigbar sein oder es kann vorgesehen sein, dass diese erste Informationen parallel auch auf der Anzeigeeinrichtung der mobilen elektronischen Vorrichtung anzeigbar sind, gegebenenfalls auch in einer modifizierten oder aufbereiteten Form.

Bezüglich der Halterung 3 bestehen keine besonderen Einschränkungen, und es kann jede geeignete Halterung 3 für das erfindungsgemäße System verwendet werden. Diverse, für das erfindungsgemäße System verwendbare Halterungen 3 sind beispielsweise in dem oben genannten Stand der Technik beschrieben. Die Halterung 3 muss lediglich derart ausgestaltet sein, dass die mobile elektronische Vorrichtung darin aufgenommen und während der bei einer Fahrt auftretenden Beschleunigungen sicher in der Halterung 3 gehalten werden kann. Bei der Halterung 3 kann es sich beispielsweise um einen solche handeln, in die die mobile elektronische Vorrichtung eingeschoben werden kann (bspw. von oben oder von der Seite), wobei die mobile elektronische Vorrichtung im eingeschobenen Zustand mechanisch oder magnetisch in der Halterung 3 lösbar gehalten wird.

Es kann vorgesehen sein, dass die Halterung 3 lösbar in dem Fahrzeug 7 befestigbar ist. Hierdurch ist es möglich, für verschiedene mobile elektronische Vorrichtungen jeweils eine passende Halterung 3 vorzusehen. Auch kann die Halterung 3 Einstellmöglichkeiten/Austauschmöglichkeiten aufweisen, mit der die Halterung 3 und gegebenenfalls auch die Schnittstelle 4 an verschiedene mobile elektronische Vorrichtungen angepasst werden können.

Das erfindungsgemäße System weist eine Schnittstelle 4 auf, mit der in ihrer einfachsten Ausführungsform Signale zu der mobilen elektronischen Vorrichtung übertragen werden können und mittels der erkannt werden kann, ob sich eine mobile elektronische Vorrichtung in der Halterung 3 befindet. In der Figur ist diese Schnittstelle 4 in Form von mehreren Kontakten (wie etwa metallische Kontaktstifte, metallische Kontakte) dargestellt. Diese Kontakte können mit entsprechenden Gegenkontakten der mobilen elektronischen Vorrichtung in Kontakt gebracht werden, wenn sich die mobile elektronische Vorrichtung in der Halterung 3 befindet. Dabei können ein oder mehrere Kontakte zum Übertragen von Signalen verwendbar sein und ein oder mehrere Kontakte zum Erkennen, ob sich die mobile elektronische Vorrichtung in der Halterung 3 befindet. Für die Funktion der Signalübertragung und der Erkennung, ob sich die mobile elektronische Vorrichtung in der Halterung 3 befindet, können der/die gleichen Kontakt(e) verwendbar sein.

Die Schnittstelle 4 ist jedoch nicht auf die Ausführung in Form von einem oder mehreren mechanischen Kontakten beschränkt. Die Schnittstelle 4 kann zur Übertragung von Signalen auch als drahtlose Schnittstelle realisiert sein, beispielsweise mit Hilfe einer kurzreichweitigen drahtlosen Übertragungstechnik, wie beispielsweise Near-Field-Communication (NFC), Bluetooth, WLAN, Infrarotlicht, etc. Und das Erkennen, ob sich die mobile elektronische Vorrichtung in der Halterung 3 befindet, kann beispielsweise mit Hilfe von einem Näherungssensor, magnetischen Sensor, Abstandssensor, NFC-Tag, etc. realisiert sein.

Bezüglich der Signale, die über die Schnittstelle 4 zu der mobilen elektronischen Vorrichtung übertragen werden können, bestehen keine besonderen Einschränkungen und es können alle geeigneten und/oder notwendigen Signale in analoger und/oder digitaler Form über die Schnittstelle 4 zu der mobilen elektronischen Vorrichtung übertragen werden.

In seiner einfachsten Ausführungsform ist es ausreichend, wenn über die Schnittstelle 4 Signale zu der mobilen elektronischen Vorrichtung übertragen werden, die den an der Bedieneinrichtung 5, 5', 5" vorgenommenen Bedienhandlungen entsprechen und die von einer hierfür in geeigneter Weise eingerichteten Einrichtung der mobilen elektronischen Vorrichtung erkannt und daraufhin von der mobilen elektronischen Vorrichtung eine entsprechende Information angezeigt wird. Da bei dieser einfachsten Ausführungsform keine Signale und/oder Daten von Einrichtungen des Fahrzeugs 7 zu der mobilen elektronischen Vorrichtung übertragen werden, ist die Anzeige von Informationen in der Regel auf solche beschränkt, die von der mobilen elektronischen Vorrichtung zur Verfügung gestellt werden können.

Wenn die mobile elektronische Vorrichtung über eine entsprechende Funktionalität verfügt, können diese Informationen beispielsweise Informationen eines Mobiltelefons, mobilen Navigationssystems, mobilen elektronischen persönlichen Assistenten, einer mobilen Medienwiedergabeeinrichtung und/oder eines mobiler Tablet-Computer umfassen.

Über die Schnittstelle 4 können in einer erweiterten Ausführungsform neben den Bedieneingaben aber auch Signale zu der mobilen elektronischen Vorrichtung übertragen werden, die an der Schnittstelle 4 anliegen, bspw. die Signale einer GPS-Antenne, Daten von einem im Fahrzeug 7 vorhandenen Datenbus, etc. Diese Daten können dann von der mobilen elektronischen Vorrichtung angezeigt und/oder verarbeitet werden.

In bevorzugter Weise ist die Schnittstelle 4 auch zum Übertragen von Signalen von der mobilen elektronischen Vorrichtung zu einer fahrzeugseitigen Einrichtung und/oder zum Übertragen von elektrischer Energie zu der mobilen elektronischen Einrichtung eingerichtet.

Hierdurch können in vorteilhafter Weise von der mobilen elektronischen Vorrichtung Informationen bzw. Daten von einer oder mehreren fahrzeugseitigen Einrichtungen abgefragt werden und diese Informationen bzw. Daten auf der Anzeigeeinrichtung der mobilen elektronischen Vorrichtung dargestellt werden. Darüber hinaus können mit Hilfe einer derart eingerichteten Schnittstelle 4 auch Informationen bzw. Daten von der mobilen elektronischen Vorrichtung zu einer oder mehreren fahrzeugseitigen Einrichtungen übertragen werden. Hierdurch ist es möglich, unter Verwendung einer entsprechend eingerichteten mobilen elektronischen Vorrichtung auch Einstellungen bei der einen oder den mehreren fahrzeugseitigen Einrichtungen vorzunehmen, bspw. bei einer Klimatisierungseinrichtung, einer Sitzverstelleinrichtung, einer Unterhaltungseinrichtung (wie etwa Radio, CD-Player), einer fahrzeugseitigen satellitengestützten Navigationseinrichtung, einer Fahrdynamik-Regelung (etwa Drive Assistant).

Die Schnittstelle 4 kann hierbei Informationen bzw. Daten von einer oder mehreren fahrzeugseitigen Einrichtungen direkt abfragen und/oder an diese übertragen oder es kann die Schnittstelle 4 mit einem im Fahrzeug vorhandenen Datenbussystem verbunden sein, über den die Abfragen/Übertragungen von/zu der einen oder den mehreren fahrzeugseitigen Einrichtungen erfolgt. Die Abfragen/Übertragungen können auf drahtgebundenem oder drahtlosem Weg erfolgen. Auch können auf diesem Wege bspw. Signale an fahrzeugseitige Lautsprecher ausgegeben werden.

Gemäß einer vorteilhaften Weiterbildung des Systems ist vorgesehen, dass das System weiter die mobile elektronische Vorrichtung umfasst, welche von einem Nutzer als ein Mobiltelefon, eine mobile Navigationseinrichtung, ein mobiler elektronischen persönlichen Assistent, eine mobile Medienwiedergabeeinrichtung und/oder ein mobiler Tablet-Computer verwendbar ist, wenn sie sich nicht in der Halterung 3 befindet.

Derartige mobile elektronische Vorrichtungen weisen in aller Regel einen eigenen Energiespeicher in Form einer wiederaufladbaren Batterie auf. Daher können diese mobilen elektronischen Vorrichtungen auch ohne eine Energieübertragung über die Schnittstelle 4 in einem Fahrzeug betrieben werden. Da der Energievorrat in den genannten Energiespeichern jedoch nur für einen Zeitraum von oftmals nur wenigen Stunden für den Betrieb derartiger mobile elektronische Vorrichtungen ausreicht, ist es von Vorteil, wenn über die Schnittstelle 4 auch elektrische Energie zu der mobilen elektronischen Vorrichtung übertragen werden kann. Diese elektrische Energie dient dann zum Betreiben der mobilen elektronischen Vorrichtung und kann - sofern erforderlich - auch zum Aufladen des Energiespeichers der mobilen elektronischen Vorrichtung verwendet werden.

Die Übertragung von elektrischer Energie über die Schnittstelle 4 zu der mobilen elektronischen Vorrichtung kann bspw. drahtgebunden oder drahtlos erfolgen (etwa über eine Induktionsladevorrichtung).

Bezüglich der Bedieneinrichtung 5, 5',5" des erfindungsgemäßen Systems bestehen keine besonderen Einschränkungen und es kann jede geeignete Bedieneinrichtung 5, 5',5" Verwendung finden. In bevorzugter Weise weist die Bedieneinrichtung 5, 5', 5" wenigstens einen Dreh-/Drückschalter 5, einen Joystick, eine Taste 5', eine Tastatur, einen Schalter 5', eine Schaltwippe 5' und/oder ein berührungs- und/oder näherungsempfindliches Pad 5" auf.

Bedieneingaben an der Bedieneinrichtung 5, 5',5" werden von der Verarbeitungseinrichtung 6 je nachdem, ob sich eine mobile elektronische Vorrichtung in der Halterung 3 befindet oder nicht, als Bedieneingaben für die mobile elektronische Vorrichtung oder als Bedieneingaben für die Anzeigeeinrichtung(en) 2, 2', 2", 2'" des Kombiinstruments 1 erkannt und verarbeitet. Die Verarbeitungseinrichtung 6 kann beispielsweise eine Hardware- oder Software-Komponente des in modernen Fahrzeugen 7 bereits standardmäßig vorhandenen Infotainmentsystems oder Bordcomputers sein aber auch eine eigenständige Baugruppe oder ein eigenständiges Bauelement.

Die Verarbeitung von Bedieneingaben an einer Bedieneinrichtung 5, 5', 5" durch die Verarbeitungseinrichtung 6 kann beispielsweise dadurch erfolgen, dass je nachdem, ob sich eine mobile elektronische Vorrichtung in der Halterung 3 befindet oder nicht, die jeweiligen Bedieneingaben entweder direkt zu dem Kombiinstrument 1 oder der mobilen elektronischen Vorrichtung weitergeleitet werden, oder dass die Bedieneingaben in Instruktionen zur Darstellung von bestimmten Informationen an die Anzeigeeinrichtung 2, 2', 2", 2'" des Kombiinstruments 1 oder die mobile elektronische Vorrichtung oder deren Anzeigeeinrichtung umgesetzt werden.

Hierbei sind erfindungsgemäß die Verarbeitungseinrichtung 6 und das Kombiinstrument 1 dazu eingerichtet, dass bei einer Bedieneingabe an der Bedieneinrichtung 5, 5', 5", die bei einer in der Halterung 3 befindlichen mobilen elektronischen Vorrichtung eine bestimmte Funktionalität bei der mobilen elektronischen Vorrichtung bewirkt bzw. auslöst, für den Fall, dass sich keine mobile elektronische Vorrichtung in der Halterung 3 befindet, bei der gleichen Bedienhandlung bei dem Kombiinstrument 1 bzw. dessen/deren Anzeigeeinrichtung(en) 2, 2', 2", 2'" eine gleiche Funktionalität bewirkt bzw. ausgelöst wird.

Wenn bspw. durch eine bestimmte Bedieneingabe ein Navigationssystem bei einer in der Halterung 3 befindlichen mobilen elektronischen Vorrichtung gestartet und angezeigt wird, ist es von Vorteil, wenn bei Abwesenheit einer mobilen elektronischen Vorrichtung in der Halterung 3 durch die gleiche Bedieneingabe auch der Start eines Navigationssystems ausgelöst und durch die Anzeigeeinrichtung(en) 2, 2', 2", 2'" des Kombiinstruments 1 angezeigt wird. Entsprechendes gilt bspw. für Einstellungen am Navigationssystem, für eine Telefonfunktion, eine Funktion eines Radios oder CD-Abspielgeräts, etc. Auch kann vorgesehen sein, dass die Anzeigen durch die Anzeigeeinrichtung(en) 2, 2', 2", 2'" des Kombiinstruments 1 auf die Anzeige von ganz bestimmten Informationen, Daten, etc. beschränkt ist, solange sich eine mobile elektronische Vorrichtung in der Halterung 3 befindet. Beispielsweise können sich die Anzeigen durch die Anzeigeeinrichtung(en) 2, 2', 2", 2'" des Kombiinstruments 1 in einem solchen Fall auf "klassische" Anzeigen beschränken, wie eine Geschwindigkeitsangabe, eine Drehzahlangabe, eine Wegstreckenangabe, Statusanzeigen bezüglich eingeschalteter Leuchten und Scheinwerfer sowie auf wichtige Warnmeldungen (bspw. bezüglich Öldruck,

Öltemperatur, Kühlmitteltemperatur, Kühlmittelstand, Motorsteuerung, etc.). Alle anderen Informationen können in einem solchen Fall von der mobilen elektronischen Vorrichtung angezeigt werden.

Befindet sich die mobile elektronische Vorrichtung nicht (mehr) in der Halterung 3 kann vorgesehen sein, dass durch die Anzeigeeinrichtung(en) 2, 2', 2", 2'" des Kombiinstruments 1 automatisch zusätzliche Informationen angezeigt werden, die über die oben genannten hinausgehen. Auch kann vorgesehen sein, dass ein Fahrer durch eine entsprechende Bedienhandlung bei der Bedieneinrichtung 5, 5', 5" bestimmte Informationen auszählen kann, die er sich durch die die Anzeigeeinrichtung(en) 2, 2', 2", 2'" des Kombiinstrument anzeigen lässt. Auch können bestimmte Funktionalitäten, die vorher von der mobilen elektronischen Vorrichtung übernommen wurden, von dem Kombiinstrument 1 übernommen werden, bspw. die Anzeige einer Navigationsinformation, eine Telefonfunktion, eine Funktion eines fahrzeugseitigen Radios oder eines CD-Abspielgeräts, etc. Diese Funktionen können dann gegebenenfalls in Abhängigkeit von den Möglichkeiten der Anzeigeeinrichtungen 2, 2', 2", 2'" des Kombiinstruments 1, mittels der Bedieneinrichtung 5, 5', 5" über das Kombiinstrument 1 auch gesteuert, eingestellt, verändert werden.

Weiter kann vorgesehen sein, dass die Software zur Steuerung der Anzeigeeinrichtung(en) 2, 2'. 2", 2'" des Kombiinstruments 1 oder die Software zur Steuerung der Anzeige bei der mobilen elektronischen Vorrichtung aufeinander abgestimmt ist oder aufeinander abstimmbar ist.

Oftmals werden die in einem Fahrzeug 7 zur Verfügung stehenden Funktionen, die hierfür erforderlichen Bedienhandlungen bei der Bedieneinrichtung 5, 5', 5" und die Anzeigemöglichkeiten des Kombiinstruments 1 bei der Produktion des Fahrzeugs festgelegt. Es sind jedoch auch Fälle denkbar, bei denen nach der Produktion des Fahrzeugs 7 eine Änderung der zur Verfügung stehenden Funktionen, erforderlichen/möglichen Bedienhandlungen und Anzeigemöglichkeiten durch das Kombiinstrument 1 (bspw. durch einen nachträglichen Einbau einer fahrzeugseitigen Einrichtung, durch eine mittels Software realisierte Modifikation/Erweiterung der zur Verfügung stehenden Funktion, Bedienhandlungen, Anzeigemöglichkeiten, etc.) erfolgt.

In allen derartigen Fällen kann die Bedienung der mobilen elektronischen Vorrichtung beispielsweise durch die Installation von einem auf das spezielle Fahrzeug zugeschnitten Programm (Applikation, sog. App) auf dieses Fahrzeug angepasst werden.

Die vorliegenden Erfindung umfasst auch ein Fahrzeug 7, insbesondere ein Kraftfahrzeug, mit einem erfindungsgemäßen System, einer Weiterbildung des Systems oder einer Ausführungsform des Systems.

Wie in der Figur schematisch dargestellt, kann in vorteilhafter Weise die Halterung 3 zur lösbaren Aufnahme der mobilen elektronischen Vorrichtung in einem Bereich neben der Lenkhandhabe 8 am Armaturenbrett 9 angeordnet sein. Dieser Bereich befindet sich bei Fahrzeugen, die für Länder mit Rechtsverkehr vorgesehen sind, rechts neben der Lenkhandhabe 8, bei Fahrzeugen, die für Länder mit Linksverkehr vorgesehen sind, entsprechend links neben der Lenkhandhabe 8. Eine Positionierung der Halterung 3 neben der Lenkhandhabe 8 ist jedoch nicht zwingend und es kann jede andere geeign ete Positionierung der Halterung 3 in dem Fahrzeug 7 vorgesehen sein (etwa im Dachbereich). Wichtig ist lediglich, dass die Halterung 3 derart im Fahrzeug 7 angeordnet ist, dass ein Fahrer von seinem Fahrersitz aus auf die Anzeigeeinrichtung der mobilen elektronischen Vorrichtung sehen kann.

Wie in der Figur ebenfalls schematisch dargestellt, kann in vorteilhafter Weise die Bedieneinrichtung 5, 5', 5", bei der es sich in allen Fällen um eine solche handelt, die räumlich getrennt von der mobilen elektronischen Vorrichtung ausgestaltet ist, in einem Bereich zwischen dem Fahrersitz und dem Beifahrersitz, an der Lenkhandhabe 8 und/oder am Armaturenbrett 9 angeordnet sein. Auch diese Positionierung der Bedieneinrichtung 5, 5', 5" ist nicht zwingend und es kann jede andere geeignete Positionierung der Bedieneinrichtung 5, 5', 5" in dem Fahrzeug vorgesehen sein.

Sofern die mobile elektronische Vorrichtung selbst eine Bedieneinrichtung bzw. Bedienmöglichkeit (bspw. in Form von virtuellen oder realen Tastern, einem berührungs- und/oder näherungsempfindlichen Display oder Pad) aufweist, kann diese, wenn sich die mobile elektronische Vorrichtung in der Halterung 3 befindet, entweder deaktiviert sein (so dass eine Bedienung der mobilen elektronischen Vorrichtung nur über die Bedieneinrichtung 5, 5', 5" möglich ist) oder auch aktiviert bleiben. Im letzteren Fall kann ein Nutzer eine ihm vertraute Bedienung der mobilen elektronischen Vorrichtung auch dann verwenden, wenn sich die mobile elektronische Vorrichtung in der Halterung 3 befindet. Andererseits kann es unter dem Gesichtspunkt einer möglichst wenig vom Straßenverkehr ablenkenden Bedienung der mobilen elektronischen Vorrichtung im Fahrzeug vorteilhaft sein, wenn die Bedieneinrichtung bzw. die Bedienmöglichkeit der mobilen elektronischen Vorrichtung, solange sie sich in der Halterung 3 befindet, auf die Bedieneinrichtung 5, 5', 5" des Systems beschränkt ist bzw. wird.

Durch die vorliegende Erfindung wird eine intelligente Umschaltung bzw. Fokussierung einer Bedieneinrichtung 5, 5', 5" zwischen einem Kombiinstrument 1 und einer mobilen elektronischen Vorrichtung mit einer Anzeigeinrichtung zur Verfügung gestellt. Die mobile elektronische Vorrichtung kann lösbar in eine Halterung 3, die an einer geeigneten Stelle in einem Fahrzeug 7 angeordnet ist, eingebracht werden und es können dann mit Hilfe der Bedieneinrichtung 5, 5', 5" Inhalte, Daten, Informationen auf der Anzeigeeinrichtung der mobilen elektronischen Vorrichtung dargestellt werden und gegebenenfalls auch Einstellungen bei fahrzeugseitigen Einrichtungen vorgenommen werden.

Wenn die mobile elektronische Vorrichtung ausgesteckt wird, also aus der Halterung 3 herausgenommen wird, schaltet die Bedieneinrichtung 5, 5', 5" automatisch um und steuert das Kombiinstrument 1.

Wird die mobile elektronische Vorrichtung wieder in die Halterung 3 eingebracht, schaltet die Bedieneinrichtung 5, 5', 5" automatisch um und steuert die mobile elektronische Vorrichtung.

Die mobile elektronische Vorrichtung kann, wenn sie sich nicht in der Halterung 3 befindet, von einem Nutzer (bspw. Fahrer, Beifahrer, Passagier) als ein Mobiltelefon, eine mobile Navigationseinrichtung, ein mobiler elektronischen persönlichen Assistent, eine mobile Medienwiedergabeeinrichtung und/oder ein mobiler Tablet-Computer, allgemeiner ausgedrückt als eine mobile elektronische Vorrichtung verwendet werden.

Da Fachleuten die für das erfindungsgemäße System erforderlichen Einrichtungen, Vorrichtungen, Bauelemente, Bauteile, etc. und deren mögliches Zusammenwirken bekannt sind, braucht in der vorliegenden Anmeldung hierauf nicht näher eingegangen zu werden.

## Patentansprüche

1. System zur alternativen Bedienung eines Kombiinstruments eines Fahrzeugs und einer mobilen elektronischen Vorrichtung, die lösbar von einer fahrzeugseitigen Halterung gehaltert werden kann und eine Anzeigeeinrichtung zum Anzeigen einer ersten Information aufweist, wobei das System ein Kombiinstrument (1) mit einer Anzeigeeinrichtung (2, 2', 2", 2"') zum Anzeigen einer zweiten Information, eine Halterung (3) zur lösbaren Aufnahme der mobilen elektronischen Vorrichtung, eine Schnittstelle (4) zum Übertragen von Signalen zu der mobilen elektronischen Vorrichtung und zum Erkennen, ob sich eine mobile elektronische Vorrichtung in der Halterung (3) befindet, sowie eine Bedieneinrichtung (5, 5', 5") zur alternativen Bedienung der mobilen elektronischen Vorrichtung und des Kombiinstruments (1) aufweist, wobei die Bedieneinrichtung (5, 5', 5") räumlich getrennt von der mobilen elektronischen Vorrichtung ausgestaltet ist, und
das System weiter eine Verarbeitungseinrichtung (6) aufweist, die dazu eingerichtet ist, Bedieneingaben an der Bedieneinrichtung (5, 5', 5") automatisch als solche zur Bedienung des Kombiinstruments zu verarbeiten, wenn sich keine mobile elektronische Vorrichtung in der Halterung (3) befindet und als solche zur Bedienung der mobilen elektronischen Vorrichtung, wenn sich die mobile elektronische Vorrichtung in der Halterung (3) befindet,
**dadurch gekennzeichnet, dass**
die Verarbeitungseinrichtung (6) und das Kombiinstrument (1) dazu eingerichtet sind, dass bei einer Bedieneingabe an der Bedieneinrichtung (5, 5', 5"), die bei einer in der Halterung (3) befindlichen mobilen elektronischen Vorrichtung eine bestimmte Funktionalität bei der mobilen elektronischen Vorrichtung bewirkt, für den Fall, dass sich keine mobile elektronische Vorrichtung in der Halterung (3) befindet, bei der gleichen Bedieneingabe an der Bedieneinrichtung (5, 5', 5") bei dem Kombiinstrument (1) die gleiche Funktionalität bewirkt wird.

2. System gemäß Anspruch 1,
**dadurch gekennzeichnet, dass**
die Anzeigeeinrichtung (2, 2', 2", 2'") des Kombiinstruments (1) dazu eingerichtet ist, aufgrund einer Bedieneingabe an der Bedieneinrichtung (5, 5', 5"), die eingegeben wird, wenn sich keine mobile elektronische Vorrichtung in der Halterung (3) befindet, eine erste Information anzeigen zu können.

3. System gemäß Anspruch 1 oder 2,
**dadurch gekennzeichnet, dass**
die erste Information eine Wegstreckeninformation, eine Motordrehzahlinformation, eine Kraftstoffverbrauchsinformation, eine Fahrzeugdiagnoseinformation, eine Navigationsinformation, eine Telefoninformation, eine Bedieninformation eines Unterhaltungssystems des Fahrzeugs, eine Notrufinformation, eine Zeitinformation, eine Bedieninformation eines Klimatisierungssystems des Fahrzeugs, eine Warninformation, eine Statusinformation und/oder eine Füllstandsinformation umfasst.

4. System gemäß einem der vorhergehenden Ansprüche,
**dadurch gekennzeichnet, dass**
das Kombiinstrument (1) eine segmentierte Anzeigeeinrichtung und/oder eine Matrixanzeigeeinrichtung umfasst.

5. System gemäß einem der vorhergehenden Ansprüche,
**dadurch gekennzeichnet, dass**
die Schnittstelle (4) auch zum Übertragen von Signalen von der mobilen elektronischen Vorrichtung zu einer fahrzeugseitigen Einrichtung und/oder zum Übertragen von elektrischer Energie zu der mobilen elektronischen Vorrichtung eingerichtet ist.

6. System gemäß einem der vorhergehenden Ansprüche,
**dadurch gekennzeichnet, dass**
es weiter die mobile elektronische Vorrichtung umfasst, welche von einem Nutzer als ein Mobiltelefon, eine mobile Navigationseinrichtung, ein mobiler elektronischen persönlichen Assistent, eine mobile Medienwiedergabeeinrichtung und/oder ein mobiler Tablet-Computer verwendbar ist, wenn sie sich nicht in der Halterung (3) befindet.

7. System gemäß einem der vorhergehenden Ansprüche,
**dadurch gekennzeichnet, dass**
die Bedieneinrichtung (5, 5', 5") wenigstens einen Dreh-/Drückschalter 5, einen Joystick, eine Taste 5', eine Tastatur, einen Schalter 5', eine Schaltwippe 5', ein berührungsempfindliches Pad 5" und/oder ein näherungsempfindliches Pad 5" aufweist.

8. Fahrzeug (7) umfassend ein System gemäß einem der Ansprüche 1 bis 7.

9. Fahrzeug (7) gemäß Anspruch 8,
**dadurch gekennzeichnet, dass**
die Halterung (3) zur lösbaren Aufnahme der mobilen elektronischen Vorrichtung in einem Bereich neben der Lenkhandhabe (8) am Armaturenbrett (9) angeordnet ist.

10. Fahrzeug (7) gemäß Anspruch 8 oder 9,
**dadurch gekennzeichnet, dass**
die Bedieneinrichtung (5, 5', 5") in einem Bereich zwischen dem Fahrersitz und dem Beifahrersitz, an der Lenkhandhabe (8) und/oder am Armaturenbrett (9) angeordnet ist.

## Claims

1. System for alternative operation of an instrument cluster of a vehicle and a mobile electronic device which can be mounted detachably on a vehicle-side holder and which has a display device for displaying a first type of information, said system comprising an instrument cluster (1) with a display device (2, 2', 2", 2"') for displaying a second type of information, a holder (3) for detachable mounting of the mobile electronic device, an interface (4) for transmitting signals to the mobile electronic device and for detecting whether a mobile electronic device is present in the holder (3), as well as an operating device (5, 5', 5") for alternative operation of the mobile electronic device and of the instrument cluster (1), said operating device (5, 5', 5") being designed so as to be spatially separate from the mobile electronic device, and said system further comprising a processing device (6) which is configured automatically to process operating inputs into the operating device (5, 5', 5") as operating inputs for the operation of the instrument cluster if there is no mobile electronic device present in the holder (3), and as operating inputs for the operation of the mobile electronic device if the mobile electronic device is present in the holder (3),
**characterised in that**
the processing device (6) and the instrument cluster (1) are configured such that, where an operating input to the operating device (5, 5', 5") initiates a particular functionality in the mobile electronic device when there is a mobile electronic device present in the holder (3), if the same operating input is given to the operating device (5, 5', 5") while no mobile electronic device is present in the holder (3), the same functionality is initiated in the instrument cluster (1).

2. System according claim 1,
**characterised in that**
the display device (2, 2', 2", 2"') of the instrument cluster (1) is configured so as to be able to display a first type of information on the basis of an operating input to the operating device (5, 5', 5") which is entered when no mobile electronic device is present in the holder (3).

3. System according claim 1 or 2,
**characterised in that**
the first type of information comprises information on distance travelled, information on engine speed, information on fuel consumption, vehicle diagnostics information, navigation information, telephone information, operating information of an in-car entertainment system, emergency call information, time information, operating information relating to the vehicle's air-conditioning system, warning information, status information and/or fuel level information.

4. System according to any one of the preceding claims,
**characterised in that**
the instrument cluster (1) comprises a segmented display device and/or a matrix display device.

5. System according to any one of the preceding claims,
**characterised in that**
the interface (4) is also configured to transmit signals from the mobile electronic device to a vehicle-side device and/or to transmit electrical energy to the mobile electronic device.

6. System according to any one of the preceding claims,
**characterised in that**
it further comprises the mobile electronic device, which can be used by a user as a mobile telephone, a mobile navigation device, a mobile electronic personal assistant, a mobile media player device and/or a mobile tablet computer when it is not mounted in the holder (3).

7. System according to any one of the preceding claims,
**characterised in that**
the operating device (5, 5', 5") comprises at least one rotary switch/pushbutton 5, a joystick, a button 5', a keypad, a switch 5', a rocker switch 5', a touch-sensitive pad 5" and/or a proximity-sensitive pad 5".

8. Vehicle (7) equipped with a system according to any one of claims 1 to 7.

9. Vehicle (7) according claim 8,
**characterised in that**
the holder (3) for detachable mounting of the mobile electronic device is arranged on the dashboard (9) in a region next to the steering wheel (8).

10. Vehicle (7) according claim 8 or 9,
**characterised in that**
the operating device (5, 5', 5") is arranged on the steering wheel (8) and/or on the dashboard (9) in a region between the driver's seat and the passenger seat.

## Revendications

1. Système destiné à la commande alternative d'un tableau de bord d'un véhicule et d'un appareil électronique mobile, qui peut être retenu de manière amovible par un dispositif de retenue côté véhicule et qui comporte un dispositif d'affichage destiné à l'affichage d'une première information,
dans lequel le système comporte un tableau de bord (1) avec un dispositif d'affichage (2, 2', 2", 2"') destiné à l'affichage d'une deuxième information, un dispositif de retenue (3) destiné à recevoir de manière amovible l'appareil électronique mobile, une interface (4) destinée à la transmission de signaux à l'appareil électronique mobile et à la détection de la présence d'un appareil électronique mobile dans le dispositif de retenue (3) ainsi qu'un dispositif de commande (5, 5', 5") destiné à la commande alternative du dispositif électronique mobile et du tableau de bord (1),
dans lequel le dispositif de commande (5, 5', 5") est réalisé séparément, dans l'espace, du dispositif électronique mobile
et dans lequel le système comporte en outre un dispositif de traitement (6) qui est conçu pour traiter automatiquement des entrées de commande au niveau du dispositif de commande (5, 5', 5") comme des entrées de commande destinées à la commande du tableau de bord lorsqu'il n'y a pas de dispositif électronique mobile dans le dispositif de retenue (3) et comme des entrées de commande destinées à la commande du dispositif électronique mobile lorsque le dispositif électronique mobile se trouve dans le dispositif de retenue (3),
**caractérisé en ce que** le dispositif de traitement (6) et le tableau de bord (1) sont conçus de telle sorte que, lors d'une entrée de commande au niveau du dispositif de commande (5, 5', 5") qui, lorsque le dispositif électronique mobile se trouve dans le dispositif de retenue (3), déclenche une certaine fonctionnalité au niveau du dispositif électronique mobile, s'il n'y a pas de dispositif électronique mobile dans le dispositif de retenue (3), la même fonctionnalité est alors déclenchée au niveau du tableau de bord (1) en présence de la même entrée de commande au niveau du dispositif de commande (5, 5', 5').

2. Système selon la revendication 1, **caractérisé en ce que** le dispositif d'affichage (2, 2', 2", 2"') du tableau de bord (1) est conçu pour pouvoir afficher une première information sur la base d'une entrée de commande au niveau du dispositif de commande (5, 5', 5") qui est entrée lorsqu'il n'y a pas de dispositif électronique mobile dans le dispositif de retenue (3).

3. Système selon la revendication 1 ou 2, **caractérisé en ce que** la première information comprend une information d'itinéraire, une information de régime de moteur, une information de consommation de carburant, une information de diagnostic de véhicule, une information de navigation, une information de téléphonie, une information de commande d'un système de divertissement du véhicule, une information d'appel d'urgence, une information de temps, une information de commande d'un système de climatisation du véhicule, une information d'alerte, une information d'état et/ou une information de niveau de remplissage.

4. Système selon l'une quelconque des revendications précédentes, **caractérisé en ce que** le tableau de bord (1) comprend un dispositif d'affichage segmenté et/ou un dispositif d'affichage à matrice.

5. Système selon l'une quelconque des revendications précédentes, **caractérisé en ce que** l'interface (4) est aussi conçue pour transmettre des signaux du dispositif électronique mobile à un dispositif côté véhicule et/ou pour transmettre de l'énergie électrique au dispositif électronique mobile.

6. Système selon l'une quelconque des revendications précédentes, **caractérisé en ce qu'**il comprend également le dispositif électronique mobile qui est utilisable par un utilisateur comme un téléphone mobile, comme un dispositif de navigation mobile, comme un assistant personnel électronique mobile, comme un dispositif de lecture multimédia mobile et/ou comme un ordinateur ou tablette mobile, lorsqu'il ne se trouve pas dans le dispositif de retenue (3).

7. Système selon l'une quelconque des revendications précédentes, **caractérisé en ce que** le dispositif de commande (5, 5', 5") comporte au moins un commutateur rotatif ou bouton-poussoir 5, une manette, une touche 5', un clavier, un interrupteur 5', un levier 5', un pavé tactile 5" et/ou un pavé sensible à la proximité 5".

8. Véhicule (7) comprenant un système selon l'une quelconque des revendications 1 à 7.

9. Véhicule (7) selon la revendication 8, **caractérisé en ce que** le dispositif de retenue (3) destiné à recevoir de manière amovible le dispositif électronique mobile est agencé dans une zone à côté du volant de direction (8) au niveau de la planche de bord (9).

10. Véhicule (7) selon la revendication 8 ou 9, **caractérisé en ce que** le dispositif de commande (5, 5', 5") est agencé dans une zone entre le siège de conducteur et le siège de passager, au niveau du volant de direction (8) et/ou au niveau de la planche de bord (9).
